# EUROPÄISCHE PATENTSCHRIFT

(11) **EP 1 160 000 B1**
(45) Veröffentlichungstag und Bekanntmachung des Hinweises auf die Patenterteilung: **19.01.2005**
(21) Anmeldenummer: 00810679.1
(22) Anmeldetag: 28.07.2000
(51) Int. Cl.: B01D 53/22, B01D 19/00

(54) **Verfahren und Vorrichtung zur Rückgewinnung von Stickstoff und/oder Propylen bei der Herstellung von Polypropylen**
Method and apparatus for the recuperation of nitrogen and/or propylene during the polypropylene production
Procédé et dispositif de récupération d'azote et/ou de propylène pendant la production de polypropylène

(30) Priorität: 31.05.2000 EP 00810484
(43) Veröffentlichungstag der Anmeldung: 05.12.2001
(73) Patentinhaber: Borsig GmbH, 13507 Berlin (DE)
(72) Erfinder: Kunze, Reinhold, 65817 Eppstein (DE)
(74) Vertreter: Radünz, Ingo, Dipl.-Ing.

(56) Entgegenhaltungen:
- EP-A- 0 585 161
- US-A- 4 501 885
- US-A- 5 127 926
- US-A- 5 769 927

## Beschreibung

Die Erfindung betrifft ein Verfahren zur Rückgewinnung von Stickstoff und/oder Propylen bei der Herstellung von Polypropylen gemäss dem Oberbegriff von Anspruch 1. Die Erfindung betrifft weiter eine Vorrichtung zur Rückgewinnung von Stickstoff und/oder Propylen bei der Herstellung von Polypropylen gemäss dem Oberbegriff von Anspruch 9.

Polypropylen wird durch Polymerisation von Propylen hergestellt. Das unmittelbar nach der Polymerisation anfallende, rohe Polypropylen enthält einen signifikanten Anteil an nicht polymerisierten Propylen, beziehungsweise an nicht reagierten Kohlenwasserstoffen. Das rohe Polypropylen muss daher einem Reinigungsprozess, auch als Strippen bezeichnet, unterzogen werden. Unter Strippen versteht man in diesem Zusammenhang die Abtrennung von nicht polymerisierten Propylen von dem Polymer in einer Stripping-Kolonne. Das Strippen erfolgt mit Stickstoff. Üblicherweise wird das Propylen, bzw. die abgezogenen Kohlenwasserstoffe zusammen mit dem Stickstoff über einen Flare an die Umwelt abgegeben.

Es ist Aufgabe der vorliegenden Erfindung ein wirtschaftlich vorteilhafteres Verfahren bzw. eine entsprechende Vorrichtung zur Erzeugung von Polypropylen vorzuschlagen.

Diese Aufgabe wird gelöst mit einem Verfahren aufweisend die Merkmale von Anspruch 1. Die Unteransprüche 2 bis 8 betreffen weitere, vorteilhafte Verfahrensschritte. Die Aufgabe wird weiter gelöst mit einer Vorrichtung aufweisend die Merkmale von Anspruch 9. Die Unteransprüche 10 bis 13 betreffen weitere vorteilhafte Ausgestaltungen.

Die Aufgabe wird insbesondere gelöst mit einem Verfahren zur Rückgewinnung von Stickstoff und/oder Propylen bei der Herstellung von Polypropylen,
- indem in einer Stripping-Kolonne das nicht polymerisierte Propylen unter Verwendung von Stickstoff vom Polypropylen getrennt wird,
- indem ein Gasgemisch umfassend Propylen und Stickstoff aus der Stripping-Kolonne abgezogen wird
- indem das Gasgemisch im wesentlichen isotherm verdichtet wird,
- indem das verdichtete Gasgemisch einer Membranvorrichtung zugeführt wird, welche derart ausgestaltet ist, dass das Propylen zumindest teilweise vom Stickstoff abtrennt wird,
- und indem der gewonnene Stickstoff und/oder das gewonnene Propylen wieder verwendet wird.

Die Aufgabe wird zudem insbesondere gelöst mit einer Vorrichtung zur Rückgewinnung von Stickstoff und/oder Propylen bei der Herstellung von Polypropylen, umfassend
- einen Flüssigkeitsring-Kompressor, der Fluid leitend mit einer Stripping-Kolonne verbindbar ist,
- sowie eine Membranvorrichtung, welche derart ausgestaltet ist, dass diese aus einem Propylen und Stickstoff umfassenden Gasgemisch den Stickstoff zumindest teilweise vom Propylen abzutrennen erlaubt, wobei die Membranvorrichtung Fluid leitend dem Kompressor nachgeordnet ist.

In einem bevorzugten Verfahrensschritt wird der zurückgewonnene Stickstoff wieder der Stripping-Kolonne zugeführt. Das erfindungsgemässe Verfahren weist somit den Vorteil auf, dass der Stickstoff (N₂) wieder verwertbar ist, wodurch die Herstellung von Polypropylen kostengünstiger wird.

In einem weiteren, bevorzugten Verfahrensschritt wird das zurückgewonnene Propylen wieder dem Reaktor, in welchem die Polymerisation abläuft, zugeführt. Das erfindungsgemässe Verfahren weist somit den Vorteil auf, dass das Propylen wieder verwertbar ist.

Das erfindungsgemässe Verfahren bzw. die Vorrichtung weisen somit den Vorteil auf, dass das Propylen und/oder der Stickstoff mit einem derart hohen Reinheitsgrad gewonnen werden können, dass eine Wiederverwendung des Stickstoffs als Strippingmedium in der Stripping-Kolonne und ein Wiedereinsatz des Propylens als Ausgangsprodukt im Reaktor möglich ist.

In der Stripping-Kolonne wird das abgetrennte Propylen zusammen mit dem Stickstoff, und gegebenenfalls noch mit weiteren Kohlenwasserstoffen wie Propan, als Gasgemisch abgezogen, danach isotherm oder im wesentlichen isotherm verdichtet, und danach einer Membran zugeführt. Zum Verdichten wird vorzugsweise ein Flüssigkeitsringkompressor verwendet, welcher vorzugsweise mit Wasser betrieben wird, und welcher das Fluid auf einen Druck von beispielsweise 10 bar bis 15 bar verdichtet. Ein derartiger Flüssigkeitsringkompressor verdichtet Gase nahezu isotherm, was den Vorteil aufweist, dass die Temperatur des Gasgemisches auf Grund der Kompression nicht erhöht wird. Würde bei der Kompression ein wesentliche Temperaturerhöhung auftreten ,so besteht die Gefahr, dass das im Gasgemisch enthaltene Propylen polymerisiert. Ein Flüssigkeitsringkompressor weist zudem den Vorteil auf, dass im Gasgemisch enthaltene Polymere, welche aus der Stripping-Kolonne mitgerissen werden, den Kompressor nicht beschädigen können. Solche im Gasgemisch enthaltene Polymere werden, falls erforderlich, mit einem "Make-up" Wassersystem, bzw. mit dem Wassersystem des Flüssigkeitsringkompressors ausgeschleust. Im Flüssigkeitsringkompressor erfolgt somit ein Waschen des geförderten Gases, wobei insbesondere der im Gas enthaltene Polypropylenstaub ausgewaschen wird, im Wasser verbleibt, und beispielsweise im dem Flüssigkeitsringkompressor nachgeordneten Gas-Flüssigkeitsseparator abgezogen werden kann.

Das verdichtete Propylen -Kohlenwasserstoffgas-Stickstoffgemisch, das sich im Flüsssigkeitsringkompressor mit Wasserdampf sättigt, wird einer organophilen Membranfläche zugeführt, welche das Propylen und die Kohlenwasserstoffe als Permeat passieren lässt, wogegen Wasserdampf und Stickstoff als Retentat zurückgehalten wird. In einer bevorzugten Ausführungsform wird der Stickstoff zusammen mit dem Wasserdampf über ein Druckentspannungsventil geleitet und der Stripping-Kolonne wieder zugeführt. Der Stripping-Vorgang erfolgt somit mit dem Strickstoff/Wasserdampfgemisch, wobei das zurückgeführte Stickstoff/Wasserdampfgemisch keiner weiteren Behandlung bedarf. Ein wesentlicher Vorteil des erfindungsgemässen Verfahrens ist somit die Tatsache, dass der Stickstoffverbrauch auf ein Minimum reduziert ist. Die Entspannung am Druckentspannungsventil erfolgt beispielsweise mit einem Expansionsverhältnis von 1 : 10, sodass das beispielsweise auf 1 bar entspannte Gas noch einen Wasserdampfanteil von 10% aufweist. Dieses Zuführen von Wasserdampf weist den Vorteil auf, dass in der Stripping-Kolonne eine genügend hohe Feuchtigkeit vorhanden ist, sodass keine künstliche Befeuchtung des Inhaltes der Stripping-Kolonne erforderlich ist.

In einem bevorzugten Verfahren wird auch das Propylen dem Reaktor zugeführt, in welchem die Polymerisation abläuft. Nach dem Durchtritt durch die Membran wird das Propylen getrocknet, daher vom Wasserdampf befreit, welcher zusammen mit den Kohlenwasserstoffen die Membran durchdrungen hat. Die Trocknung kann beispielsweise mittels einer hygrophilen Membranfläche erfolgen, bei welcher das Permeat, das heisst der Wasserdampf, mit einer Flüssigkeitsring-Vakuumpumpe abgesaugt wird. Der Wasserdampf kondensiert zum Teil in der Flüssigkeitsring-Vakuumpumpe. Der zum Teil noch mit Kohlenwasserstoffen beladene Wasserdampf kann vorteilhafterweise der Stripping-Kolonne zugeführt werden. Zur vollständigen Trocknung wird das Propylen, welches auch noch weitere Kohlenwasserstoffgase aufweisen kann, einem weiteren Trockner zugeführt, beispielsweise einem Molekularsieb, bevor das Propylen über einen Speisekompressor in den Reaktor zurückgepumpt wird.

Dieses Verfahren weist somit den Vorteil auf, dass das Propylen mit hohem Reinheitsgrad dem Reaktor als Ausgangsprodukt wieder zur Verfügung gestellt werden kann. Dieses Verfahren ist somit sehr kostengünstig und umweltfreundlich.

Im bevorzugten Verfahren wird der Stickstoff wieder verwendet und der Verlust von Propylen, auch als "C₃" bezeichnet, so gering wie möglich gehalten, was ein äusserst ökonomisches und ökologisches Verfahren ergibt.

In einer bevorzugten Ausführungsform wird ein Flüssigkeitsringkompressor verwendet, welcher das Gasgemisch auf mindestens 12 Bar verdichtet.

Die erfindungsgemässe Vorrichtung weist zudem folgende Vorteile auf:
- geringe Komplexität des Gesamtsystems
- niedrige Verdichtungstemperatur von etwa 20 °C über der Temperatur des zur Verfügung stehenden Kühlwassers
- günstigere Funktion der Membranen auf grund der tiefen Temperatur des Gases
- geringere erforderliche Membranflächen.
All diese Vorteile ermöglichen die erfindungsgemässe Vorrichtung kostengünstig herzustellen.

Das erfindungsgemässe Verfahren weist die weiteren Vorteile auf,
- dass die Prozessgase absolut frei von Schmieröl sind
- dass somit kein Ölabscheider erforderlich ist
- dass das Propylen während dem Komprimieren nicht polymerisiert
- dass die Prozesstemperaturen nur gering von der Umgebungstemperatur abweichen, sodass keine Isolation der Leitungen erforderlich ist. Die Prozessgase haben beispielsweise eine Temperatur zwischen 50 und 60 °C.

Der durch den Flüssigkeitsringkompressor bewirkte, relativ hohe Druck von beispielsweise 10 bis 15 bar weist den Vorteil auf, dass die nachfolgend angeordnete Membran relativ klein ausgestaltet sein kann. Trotz des hohen Druckes tritt am Früssigkeitsringkompressor keine Polymerisation auf, da die Kompression im wesentlichen isotherm erfolgt. Die in der erfindungsgemässen Vorrichtung geförderten Fluide müssen weder stark erwärmt noch stark abgekühlt werden, sodass die Fluide weder eine besonders hohe noch eine besonders tiefe Temperatur aufweisen. Insbesondere tritt auch keine Verflüssigung von Bestandteilen des Fluides auf. Dieser Aspekt ist insbesondere für die Lebensdauer der Membran von Wichtigkeit, da die Membran an sich temperaturempfindlich ist. Ein weiterer Vorteil der erfindungsgemässen Vorrichtung ist die Tatsache, dass auf Grund des in der Anlage vorherrschenden, relativ hohen Drucks, die Anlage sehr klein und kompakt ausgestaltet und dimensioniert werden kann.

Der Flüssigkeitsringkompressor kann beispielsweise wie in der Druckschrift EP 0 967 393 A2 offenbart ausgestaltet sein.

Die Erfindung wird nachfolgend an Hand eines Ausführungsbeispieles beschrieben.

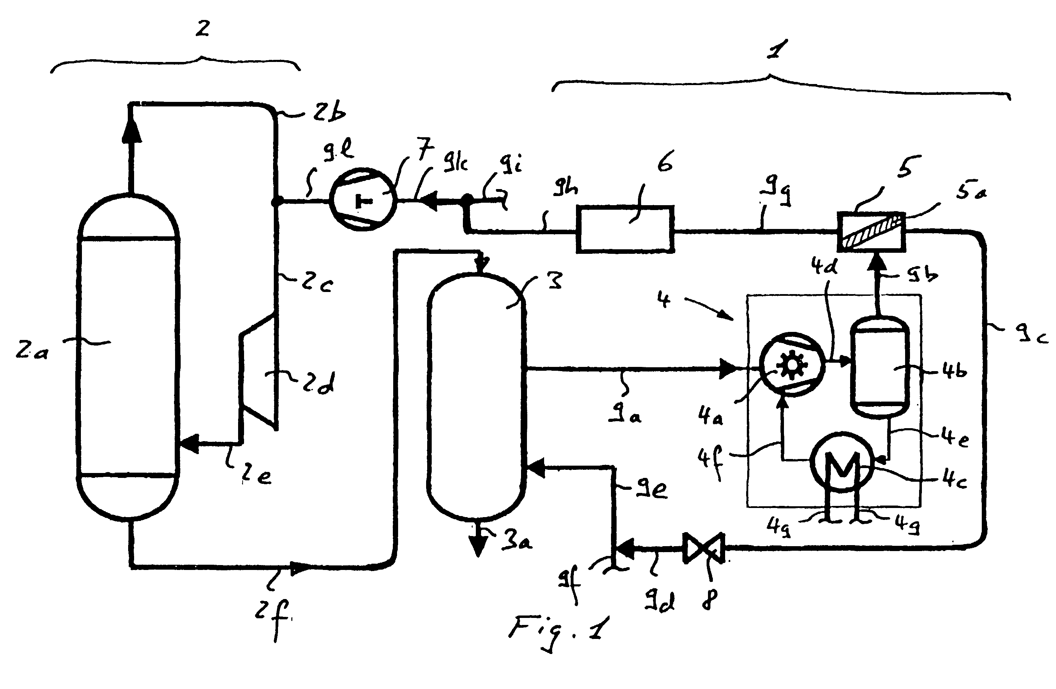

Fig. 1 zeigt schematisch eine Vorrichtung zur Rückgewinnung von Stickstoff und/oder Propylen bei der Herstellung von Polypropylen.

Im Reaktor 2 wird das Propylen zu rohem Polypropylen polymerisiert. Das Propylen wird über die Verbindungsleitung 9i, 9k dem Kompressor 7 zugeführt, und nachfolgend über die Zuleitung 2c, dem Rezirkulationskompressor 2d und die Zuleitung 2e dem Reaktor 2a zugeführt. Über die Ableitung 2b und die nachfolgenden Zuleitungen 2c, 2e wird der Inhalt des Reaktorbehälters 2a zirkuliert. Über die Ableitung 2f wird dem Reaktor 2 das rohe Polypropylen entzogen und der Stripping-Kolonne 3 zugeführt. In der Stripping-Kolonne 3 wird das nicht polymerisierte Propylen unter Verwendung von Stickstoff vom Polypropylen getrennt. Im dargestellten Ausführungsbeispiel wird in der Stripping-Kolonne 3 zwischen 700 und 1500 kg N₂ pro Stunde umgesetzt. Das derart gereinigte Polypropylen wird über die Ableitung 3a einer weiteren Verarbeitung zugeführt. Ein Gasgemisch umfassend Propylen, Stickstoff und gegebenenfalls weitere Kohlenwasserstoffe, wird über die Verbindungsleitung 9a dem Pumpsystem 4 zugeführt. Das Pumpsystem 4 umfasst eine Flüssigkeitsringkompressor 4a, welche, unter Ausbildung eines Flüssigkeitskreislaufes, über die Verbindungsleitungen 4d, 4e, 4f Fluid leitend mit einem Separator 4b, auch als Gas-Flüssigkeitsabscheider bezeichnet, sowie einem Kühler 4c mit Kühlleiter 4g verbunden ist. Der Flüssigkeitsringkompressor 4a ist derart ausgestaltet, dass ein Druck von etwa 12 Bar erzeugt wird. Dabei wird das Gasgemisch im wesentlichen isotherm, d.h. ohne bzw. mit einer unwesentlichen Erwärmung verdichtet, da die Kompressionswärme im wesentlichen von der Flüssigkeit aufgenommen wird. Nebst anderen Flüssigkeiten ist zur Verwendung im Flüssigkeitskreislauf insbesondere Wasser geeignet. Im Separator 4b werden die flüssigen und gasförmigen Bestandteile getrennt, wobei die gasförmigen Anteile über die Ableitung 9b einer Membranvorrichtung 5 mit Membran 5a zugeführt werden.

Die organophile Membran 5a hat die Eigenschaft, dass sie für Kohlenwasserstoffe wesentlich durchlässiger ist als für Stickstoff. Die Kohlenwasserstoffe, insbesondere das Propylen aber auch weitere Kohlenwasserstoffe, passieren die Membran 5a, und gelangen in die Verbindungsleitung 9g, wogegen der Stickstoff und der Wasserdampf von der Membran 5a zurückgehalten werden und in die Verbindungsleitung 9c gelangen. Der Stickstoff wird zusammen mit dem Wasserdampf über die Leitung 9c dem Druckentspannungsventil 8 zugeleitet, darin entspannt, und nachfolgend über die Leitungen 9d, 9e der Stripping-Kolonne 3 zugeführt. Der derart gereinigte Stickstoff kann beispielsweise eine Reinheit von 99,5% aufweisen. Die Membran 5a kann beispielsweise aus einem Mehrschichtverbundwerkstoff bestehen, im Englischen auch als "Multilayer Composite Membrane" bezeichnet. Eine derartige Dünnfilm-Membran weist beispielsweise eine 10 bis 100 mal höhere Permeabilität für Kohlenwasserstoffe im Vergleich zu Stickstoff auf.

Die Verbindungsleitung 9g mündet in einen Trockner 6, welcher das Propylen trocknet, d.h. von dem Wasserdampf befreit, welcher die Membran 5a zusammen mit den Kohlenwasserstoffen durchdrungen hat. Die Trocknung erfolgt im dargestellten Trockner 6 mit einer hygrophilen Membran, bei welcher das Permeat, das heisst der Wasserdampf, mit einer Flüssigkeitsring-Vakuumpumpe abgesaugt wird. Der Wasserdampf kondensiert teilweise in der Flüssigkeitsring-Vakuumpumpe. Die restlichen gasförmigen Bestandteile können beispielsweise wieder der Stripping-Kolonne 3 zugeführt werden. Nach der hygrophilen Membran durchläuft das Propylen und ev. weitere Kohlenwasserstoffgase einen weiteren Trockner, zum Beispiel ein Molekularsieb, um das Propylen vollständig zu trocken. Danach wird das Propylen über die Leitungen 9h, 9k, 9l und den Kompressor 7 dem Reaktor 2a zugeführt.

Falls erforderlich wird weiterer Stickstoff über die Zuleitung 9f in die Zuleitung 9e eingeleitet. Zudem wird Propylen über die Zuleitung 9i der Zuleitung 9k zugeleitet.

Das nach der Membranvorrichtung 5 anfallende Propylen bzw. der Stickstoff kann auch einer sonstigen, nachfolgenden Verarbeitung zugeführt werden.

Das im Kreislauf 9c, 9e, 9a geförderte Fluid kann einen hohen Anteil Monomere aufweist. Das Fördern des Fluides in diesem Kreislauf ist sehr stabil, insbesondere weil im Kreislauf weder eine wesentliche Erwärmung noch eine wesentliche Abkühlung erfolgt.

## Patentansprüche

1. Verfahren zur Rückgewinnung von Stickstoff und/oder Propylen bei der Herstellung von Polypropylen,
- indem in einer Stripping-Kolonne (3) das nicht polymerisierte Propylen unter Verwendung von Stickstoff vom Polypropylen getrennt wird,
- indem ein Gasgemisch umfassend Propylen und Stickstoff aus der Stripping-Kolonne (3) abgezogen wird
- indem das Gasgemisch im wesentlichen isotherm verdichtet wird,
- indem das verdichtete Gasgemisch einer Membranvorrichtung (5) zugeführt wird, welche derart ausgestaltet ist, dass das Propylen zumindest teilweise vom Stickstoff abtrennt wird,
- und indem der gewonnene Stickstoff und/oder das gewonnene Propylen wieder verwendet wird.

2. Verfahren nach Anspruch 1, **dadurch gekennzeichnet, dass** das Gasgemisch mit einem Flüssigkeitsringkompressor (4a) verdichtet wird.

3. Verfahren nach Anspruch 2, **dadurch gekennzeichnet, dass** der Flüssigkeitsringkompressor (4a) mit Wasser betrieben wird.

4. Verfahren nach einem der vorhergehenden Ansprüche, **dadurch gekennzeichnet, dass** das Gasgemisch auf zumindest 12 Bar verdichtet wird.

5. Verfahren nach einem der vorhergehenden Ansprüche, **dadurch gekennzeichnet, dass** der gewonnene Stickstoff der Stripping-Kolonne (3) zugeführt wird.

6. Verfahren nach Anspruch 5, **dadurch gekennzeichnet, dass** der gewonnene Stickstoff zumindest teilweise entspannt wird, bevor dieser der Stripping-Kolonne (3) zugeführt wird.

7. Verfahren nach einem der vorhergehenden Ansprüche, **dadurch gekennzeichnet, dass** das gewonnene Propylen getrocknet wird, und danach einem Reaktor (2a), in welchem die Polymerisation abläuft, zugeführt wird.

8. Verfahren nach Anspruch 7, **dadurch gekennzeichnet, dass** das gewonnene Propylen mit einem Molekularsieb getrocknet wird.

9. Vorrichtung (1) zur Rückgewinnung von Stickstoff und/oder Propylen bei der Herstellung von Polypropylen, umfassend
- einen Flüssigkeitsringkompressor (4a), der Fluid leitend mit einer Stripping-Kolonne (3) verbindbar ist,
- sowie eine Membranvorrichtung (5), welche derart ausgestaltet ist, dass diese aus einem Propylen und Stickstoff umfassenden Gasgemisch den Stickstoff zumindest teilweise vom Propylen abzutrennen erlaubt, wobei die Membranvorrichtung (5) Fluid leitend dem Kompressor (4a) nachgeordnet ist.

10. Vorrichtung (1) nach Anspruch 9, **dadurch gekennzeichnet, dass** die Membranvorrichtung (5) Fluid leitend mit der Stripping-Kolonne (3) . verbunden ist, um den zurück gewonnenen Stickstoff der Stripping-Kolonne (3) zuzuführen.

11. Vorrichtung (1) nach einem der Ansprüche 9 oder 10, **dadurch gekennzeichnet, dass** die Membranvorrichtung (5) Fluid leitend mit einer Verwertungsvorrichtung oder einem Reaktor (2) verbunden ist, um das zurück gewonnene Propylen wieder zu verwenden.

12. Vorrichtung (1) nach Anspruch 11, **dadurch gekennzeichnet, dass** zwischen der Membranvorrichtung (5) und dem Reaktor (2) ein Trockner (6) angeordnet ist.

13. Vorrichtung (1) nach Anspruch 12, **dadurch gekennzeichnet, dass** der Trockner (6) ein Molekularsieb umfasst.

## Claims

1. Method for the recovery of nitrogen and/or propylene during the production of polypropylene,
- by separating in a stripping column (3) the non-polymerized propylene from polypropylene by means of nitrogen,
- by extracting a gas mixture comprising propylene and nitrogen from stripping column (3),
- by compressing the gas mixture chiefly isothermally,
- by feeding the compressed gas mixture to a diaphragm device (5) which is designed in such a form that at least part of the propylene is separated from the nitrogen,
- and by reusing the recovered nitrogen and/or the recovered propylene.

2. Method according to claim 1, **characterized in that** the gas mixture is compressed by a liquid ring compressor (4a).

3. Method according to claim 2, **characterized in that** liquid ring compressor (4a) is operated with water.

4. Method according to one of claims 1. to 3., **characterized in that** the gas mixture is compressed to at least 12 bar.

5. Method according to one of claims 1. to 4., **characterized in that** the recovered nitrogen is fed to stripping column (3).

6. Method according to claim 5, **characterized in that** at least part of the recovered nitrogen is depressurized before this is delivered to stripping column (3).

7. Method according to one of claims 1. to 6., **characterized in that** the recovered propylene is dried and then is fed to a reactor (2a) in which the polymerization takes place.

8. Method according to claim 7., **characterized in that** the recovered propylene is dried in a molecular sieve.

9. Device (1) for recovering nitrogen and/or propylene during the production of polypropylene comprising
- a liquid ring compressor (4a), which can be connected fluid-conductive with a stripping column (3),
- as well as a diaphragm device (5) which is designed in such a form that this allows to separate, in a gas mixture comprising propylene and nitrogen, at least part of the nitrogen from the propylene where diaphragm device (5) is arranged fluid-conductive downstream of compressor (4a).

10. Device (1) according to claim 9., **characterized in that** diaphragm device (5) is connected fluid-conductive with stripping column (3) in order to feed the recovered nitrogen to stripping column (3).

11. Device (1) according to one of claims 9 or 10, **characterized in that** diaphragm device (5) is connected fluid-conductive with a processing device or a reactor (2) in order to reuse the recovered propylene.

12. Device (1) according to claim 11., **characterized in that** a drier (6) is arranged between diaphragm device (5) and reactor (2).

13. Device (1) according to claim 12, **characterized in that** drier (6) comprises a molecular sieve.

## Revendications

1. Procédé pour la récupération d'azote et/ou de propylène lors de la fabrication de polypropylène, comprenant les étapes :
- selon laquelle dans une colonne de strippage (3) le propylène non polymérisé est séparé du polypropylène par utilisation d'azote,
- selon laquelle un mélange gazeux comprenant du propylène et de l'azote est soutiré de la colonne de strippage (3),
- selon laquelle le mélange gazeux est comprimé essentiellement de manière isotherme,
- selon laquelle le mélange gazeux comprimé est introduit dans un dispositif à membrane (5), qui est conformé de telle sorte que le propylène soit séparé au moins partiellement de l'azote,
- et selon laquelle l'azote extrait et/ou le propylène extrait est utilisé à nouveau.

2. Procédé selon la revendication 1, **caractérisé en ce que** le mélange gazeux est comprimé avec une pompe à vide à anneau liquide (4a).

3. Procédé selon la revendication 2, **caractérisé en ce que** la pompe à vide à anneau liquide (4a) fonctionne avec de l'eau.

4. Procédé selon l'une des revendications précédentes, **caractérisé en ce que** le mélange gazeux est comprimé à au moins 12 bars.

5. Procédé selon l'une des revendications précédentes, **caractérisé en ce que** l'azote extrait est introduit dans la colonne de strippage (3).

6. Procédé selon la revendication 5, **caractérisé en ce que** l'azote extrait est au moins partiellement détendu avant que celui-ci ne soit introduit dans la colonne de strippage (3).

7. Procédé selon l'une des revendications précédentes, **caractérisé en ce que** le propylène extrait est séché et est ensuite introduit dans un réacteur (2a), .dans lequel se déroule la polymérisation.

8. Procédé selon la revendication 7, **caractérisé en ce que** le propylène extrait est séché avec un tamis moléculaire.

9. Dispositif (1) pour la récupération d'azote et/ou de propylène lors de la fabrication de polypropylène, comprenant :
- une pompe à vide à anneau liquide (4a), qui est susceptible d'être en liaison motrice avec une colonne de strippage (3),
- ainsi qu'un dispositif à membrane (5), qui est conformé de telle sorte que celui-ci permette de séparer, à partir d'un mélange gazeux comprenant du propylène et de l'azote, l'azote au moins partiellement du propylène, le dispositif à membrane (5) étant disposé en aval de et en liaison motrice avec la pompe à vide à anneau liquide (4a).

10. Dispositif (1) selon la revendication 9, **caractérisé en ce que** le dispositif à membrane (5) est en liaison motrice avec la colonne de strippage (3), afin d'introduire l'azote récupéré dans la colonne de strippage (3).

11. Dispositif (1) selon la revendication 9 ou 10, **caractérisé en ce que** le dispositif à membrane (5) est en liaison motrice avec un dispositif de valorisation de produits de récupération ou avec un réacteur (2), afin d'utiliser à nouveau le propylène récupéré.

12. Dispositif (1) selon la revendication 11, **caractérisé en ce qu'**entre le dispositif à membrane (5) et le réacteur (2) est disposé un sécheur (6).

13. Dispositif (1) selon la revendication 12, **caractérisé en ce que** le sécheur (6) comporte un tamis moléculaire.
